# EUROPEAN PATENT SPECIFICATION

(11) **EP 3 370 131 B1**
(45) Date of publication and mention of the grant of the patent: **01.04.2020**
(21) Application number: 18155600.2
(22) Date of filing: 07.02.2018
(51) Int. Cl.: G06F 1/16, G06F 3/01, G06F 3/0346, F04D 27/00

(54) **METHOD AND DEVICE FOR IDENTIFYING AN ACTION**
VERFAHREN UND VORRICHTUNG ZUR IDENTIFIZIERUNG EINER AKTION
PROCÉDÉ ET DISPOSITIF D'IDENTIFICATION D'UNE ACTION

(30) Priority: 01.03.2017 CN 201710118183
(43) Date of publication of application: 05.09.2018
(73) Proprietor: Beijing Xiaomi Mobile Software Co., Ltd., Beijing 100085 (CN); Beijing Smartmi Technology Co., Ltd., 100085 Beijing (CN)
(72) Inventor: LIU, Dongxu, Beijing, Beijing 100085 (CN)
(74) Representative: dompatent von Kreisler Selting Werner - Partnerschaft von Patent- und Rechtsanwälten mbB

(56) References cited:
- WO-A1-2016/139798
- KR-A- 20120 007 615
- US-A1- 2010 194 682
- US-A1- 2013 147 709
- US-A1- 2016 139 169
- Every Review: "VH Ultra Quiet USB Powered Portable Desk Fan, Touch Switch with Smart Sensor", You Tube, 7 August 2016 (2016-08-07), pages 1-2, XP054978406, Retrieved from the Internet: URL:https://www.youtube.com/watch?v=6jjvfL PEj8w [retrieved on 2018-06-08]

## Description

### TECHNICAL FIELD

The present disclosure relates to the field of communication technology, and more particularly to methods and devices for identifying an action.

### BACKGROUND

Electrical fans are household appliances that utilize a motor to drive rotation of fan blades in order to speed up air flow, and in turn achieve air circulation and cooling. Every summer, electrical fans are used to provide bring air cooling for humans with lower energy consumption than air conditioners.

D1 (WO 2016/139798 A1) discloses an input detection method in a device worn on the arm by using a band, wherein the device acquires information outputted by an acceleration sensor of the device, and on the basis of the outputted information, if a change corresponding to band restriction has been detected, the device determines that the change was an input.

D2 (US 2013/147709 A1) discloses an apparatus and method for detecting a tap. The apparatus includes a sensor configured to detect a motion and output a signal corresponding to the motion, a gradient calculating unit connected to the sensor to calculate a gradient of the output signal from the sensor, a similarity determining unit connected to the gradient calculating unit to determine a similarity between a rising gradient and a falling gradient of a curve of the output signal, a tap determining unit connected to the similarity determining unit to determine detection of a tap according to the determination result of the similarity determining unit, and an output unit configured to output the determination result of the tap determining unit.

### SUMMARY

In accordance with some embodiments of the disclosed subject matter, methods and devices for identifying an action are provided. Various technical solutions are described below.

According to a first aspect of embodiments of the present disclosure, there is provided a method for identifying an action, which is used for interactive control of an intelligent device. The method includes: recording vibration trajectory information for vibration of an intelligent device from start to stabilization of the vibration; judging whether the vibration is a damping vibration based on the vibration trajectory information; and determining that the vibration is caused by a user's trigger action in the case that the vibration is a damping vibration.

The technical solution provided by embodiments of the present disclosure can provide the following beneficial effects: a condition that the intelligent device generates a damping vibration merely is to receive an impact force, rather than vibration generated by movement of the intelligent device, so that the intelligent device can recognize that the vibration is caused by a user's trigger action, without requiring human-machine interaction by using keyboard or remote control, and thus user's experience can be improved.

Further in accordance with embodiments of the present disclosure the judging whether the vibration is a damping vibration based on the vibration trajectory information includes: acquiring, based on the vibration trajectory information, position information of n first peaks and n first troughs of the vibrationn trajectory information in time order, wherein n is a positive integer; determining, according to the position information of the n first peaks and the n first troughs, n first amplitude distances between respective adjacent peaks and troughs in amplitude direction; and judging whether the n first amplitude distances successively decrease in time order; wherein it is determined that the vibration is a damping vibration in the case that the n first amplitude distances successively decrease, and it is determined that the vibration is not a damping vibration in the case that the n first amplitude distances do not successively decrease.

The technical solution provided by embodiments of the present disclosure can provide the following beneficial effects: it is able to determine whether the vibration is a damping vibration by judging attenuation of amplitude distances, by which results can be obtained intuitively without complicated process and calculation efficiency can be improved.

Further, the judging whether the n first amplitude distances are successively decreased in time order includes: judging whether the first amplitude distance in the n first amplitude distances is greater than a preset distance; and judging whether the n first amplitude distances are successively decreased in the case that the first amplitude distance is greater than the preset distance.

The technical solution provided by embodiments of the present disclosure can provide the following beneficial effects: it is able to exclude vibrations caused by misoperations or environmental influences, and thus accuracy of action identification can be improved.

Further, the acquiring, based on the vibration trajectory information, position information of n first peaks and n first troughs of the vibration trajectory information in time order includes: acquiring the total number of all peaks and troughs of the vibration trajectory information; and acquiring the position information of n first peaks and n first troughs of the vibration trajectory information in time order in the case that the total number of all peaks and troughs is greater than or equal to 2n.

The technical solution provided by embodiments of the present disclosure can provide the following beneficial effects: it is able to ignore minute vibrations to further exclude vibrations caused by misoperations or environmental influences.

In some embodiments, the recording vibration trajectory information for vibration of an intelligent device from start to stabilization of the vibration includes: collecting vibration trajectory information for the vibration in a preset direction by using a gravity sensor.

The technical solution provided by embodiments of the present disclosure can provide the following beneficial effects: it is able to improve accuracy of action identification by acquiring only vibrations in the preset direction because vibrations in the preset direction are the largest.

According to a second aspect of embodiments of the present disclosure, there is provided a device for identifying an action, which is used for interactive control of an intelligent device. The device includes: a recording module configured to record vibration trajectory information for vibration of an intelligent device from start to stabilization of the vibration; a judgment module configured to determine whether the vibration is a damping vibration based on the vibration trajectory information; and a determination module configured to determine that the vibration is caused by a user's trigger action in the case that the vibration is a damping vibration.

Further in accordance with embodiments of the present disclosure the judgment module includes: an acquisition sub-module configured to acquire, based on the vibration trajectory information, position information of n first peaks and n first troughs of the vibrationn trajectory information in time order, wherein n is a positive integer; a determination sub-module configured to determine, according to the position information of the n first peaks and the n first troughs, n first amplitude distances between respective adjacent peaks and troughs in amplitude direction; and a judgment sub-module configured to judge whether the n first amplitude distances successive decrease in time order; wherein it is determined that the vibration is a damping vibration in the case that the n first amplitude distances successively decrease, and it is determined that the vibration is not a damping vibration in the case that the n first amplitude distances do not successively decrease.

Further, the judgment sub-module is configured to: judge whether the first amplitude distance in the n first amplitude distances is greater than a preset distance; and judge whether the n first amplitude distances successively decrease in the case that the first amplitude distance is greater than the preset distance.

Further, the acquisition sub-module is configured to: acquiring the total number of all peaks and troughs of the vibration trajectory information; and acquiring the position information of n first peaks and n first troughs of the vibration trajectory information in time order in the case that the total number of all peaks and troughs is greater than or equal to 2n.

In some embodiments, the recording module includes: a collection sub-module configured to collet vibration trajectory information for the vibration in a preset direction by using a gravity sensor.

In some embodiments, there is provided a device for identifying an action, which is used for interactive control of an intelligent device. The device includes: a processor; a memory for storing instructions executable by the processor, wherein the processor is configured to: record vibration trajectory information for vibration of an intelligent device from start to stabilization of the vibration; judge whether the vibration is a damping vibration based on the vibration trajectory information; and determine that the vibration is caused by a user's trigger action in the case that the vibration is a damping vibration.

It is to be understood that both the foregoing general descriptions and the following detailed descriptions are exemplary and explanatory only and do not limit the scope of the disclosure.

### BRIEF DESCRIPTION OF THE DRAWINGS

The drawings herein are incorporated in and constitute a part of this specification, showing embodiments consistent with the present disclosure, and together with the descriptions, serve to explain the principles of the present disclosure.
Figure 1 is a flow chart of a method for identifying an action according to some exemplary embodiments.
Figure 2 is a schematic view of a fan head of an electrical fan according to some exemplary embodiments.
Figure 3 is a flow chart of a method for identifying an action according to some exemplary embodiments.
Figure 4 is a flow chart of a method for identifying an action according to some exemplary embodiments.
Figure 5 is a block diagram of a device for identifying an action according to some exemplary embodiments.
Figure 6 is a block diagram of a device for identifying an action according to some exemplary embodiments.
Figure is a block diagram of a device for identifying an action according to some exemplary embodiments.
Figure 8 is a block diagram of a device for identifying an action according to some exemplary embodiments.

### DETAILED DESCRIPTION

Hereinafter, exemplary embodiments will be described in detail, examples of which are shown in the drawings. In the following descriptions when referring to the drawings, the same numerals in the different drawings denote the same or similar elements unless otherwise indicated. The embodiments described in the following exemplary embodiments are not representative of all embodiments consistent with the present disclosure. Rather, they are merely examples of apparatuses and methods consistent with some aspects of the present disclosure as detailed in the appended claims.

In related art, techniques for achieving interactive control of an intelligent device mainly concentrate on utilization of a keyboard or a remote control. For example, an electrical fan is an essential object for many families, but human-machine interaction supported by current electric fans is limited to utilization of a keyboard or a remote control. For the keyboard, it takes up a large part of a panel of the electrical fan and requires press of a particular button thereon; for the remote control, it is often cannot be found by a user, and since it has smaller buttons, it is difficult for the user to operate.

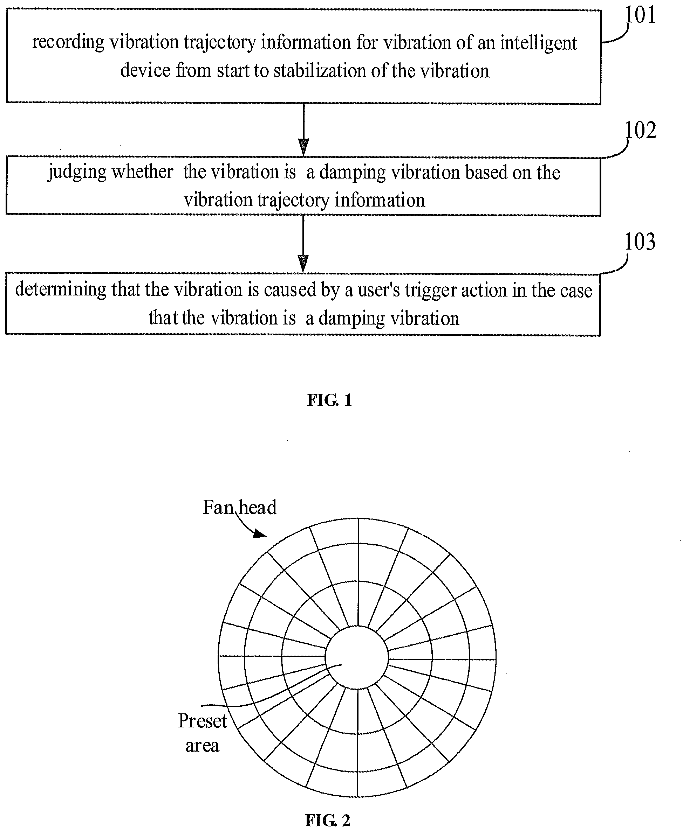

Figure 1 is a flow chart of a method for identifying an action according to some exemplary embodiment. As shown in Figure 1, the method is applicable to a device for identifying an action, which can be used for interactive control of an intelligent device. The method include the following steps 101 to 103.

In step 101, vibration trajectory information for vibration of an intelligent device from start to stabilization of the vibration is recorded.

Vibration intensity may vary depending on a position at which vibration trajectory information is recorded. Therefore, the position for recording vibration needs to be set in advance. In general, the position for recording vibration may be set at a position at which a trigger action is to be performed.

When the intelligent device itself receives a force from outside, it vibrates. The device senses and records vibration trajectory information of an entire procedure of the vibration from start to stabilization thereof. The vibration trajectory information may be collected by a sensor provided in the device. The vibration trajectory information may include position information of vibration points and corresponding timing information. The vibration may be vibration of the whole intelligent device or vibration of one or more of components of the intelligent device. Here, the procedure from start to stabilization of vibration may be a procedure from a time point at which the intelligent device starts to wobble to a time point at which the intelligent device stops wobbling, by which the vibration trajectory information is generated as information about vibration trajectory. The vibration trajectory is a movement trajectory described by an x-axis indicating corresponding to time and a y-axis corresponding to amplitude of vibration, where a maximum point in the trajectory is a peak and a minimum point is a trough.

In step 102, a judgment as to whether the vibration is a damping vibration is made based on the vibration trajectory information.

Damping vibration is a vibration which is caused when a vibration system experiences friction force, dielectric resistance and/or other energy consumption and has its amplitude gradually reduced over time. Damping vibration is sometimes referred to as decrement vibration or attenuation vibration.

Therefore, it is possible to determine whether t the vibration is a damping vibration based on the vibration trajectory information. For example, it is possible to determine amplitude from the vibration trajectory information and determine whether it is a damping vibration based on attenuation of the amplitude. Alternatively, it is possible to determine a distance between a peak and a trough in amplitude direction from the vibration trajectory information, and determine whether it is a damping vibration according to attenuation of the distance. The method of the present embodiment is not limited thereto.

In step 103, it is determined that the vibration is caused by a user's trigger action in the case that the vibration is a damping vibration.

In some embodiments, the user's trigger action may be performed on a preset area. The preset area is an area set on the device that is designated in advance, in which the user can perform a trigger action and the device can sense the action noticeably. The sensor for sensing vibration can be set in the preset area.

In an example of the electrical fan, the manufacturer can set a rule (which allows a trigger action to be performed on a front surface of the fan head). The preset area may be located any position on a surface of the fan head of the electrical fan accessible by the user, as shown in Figure 2. If the preset area is located on the center of the surface facing the user, not only the user's hand will not be hurt when the user performs a trigger action at this position, but also the electrical fan can sense its maximum vibration. Figure 2 does not show fan blades, but this does not mean that there is no fan blades in the fan head.

In some embodiments, upon determination that the vibration is generated by the user's trigger action acting in the preset area, an operation corresponding to the trigger action can be performed, for example, turn on/off of the device, adjustment of gears of the device. The trigger action generally may be a knock operation, a tap operation. The present embodiment is not limited, as long as the operation can impart a force to the device and ensure vibration of the device.

In some embodiments, as long as a damping vibration is determined, it can prove at least that the vibration is not due to wobbling caused by the user carrying the device.

In some embodiments, a condition that the intelligent device generates a damping vibration merely is to receive an impact force, rather than vibration generated by movement of the intelligent device, so that the intelligent device can recognize that the vibration is caused by a user's trigger action, without requiring human-machine interaction by using keyboard or remote control, and thus user's experience can be improved.

In some embodiments, the step 102 may include: acquiring, based on the vibration trajectory information, position information of n first peaks and n first troughs of the vibration trajectory information in time order, wherein n is a positive integer; determining, according to the position information of the n first peaks and the n first troughs, first n amplitude distances between respective adjacent peaks and troughs in amplitude direction; and judging whether the n first amplitude distances successively decrease in time order; wherein it is determined that the vibration is a damping vibration in the case that the n first amplitude distances successively decrease, and it is determined that the vibration is not a damping vibration in the case that the n first amplitude distances do not successively decrease.

In some embodiments, the determining, according to the position information of the n first peaks and the n first troughs, n first amplitude distances between respective adjacent peaks and troughs in amplitude direction may include: determining, according to the position information of the i^{th} peak and the i^{th} trough, the i^{th} amplitude distance, wherein i is an integer from 1 to n, and n may be 4.

In some embodiments, the judging whether the first n amplitude distances are successively decreased in time order may include: sorting the n first amplitude distances in time order; determine whether the j^{th} amplitude distance is greater than the (j+1)^{th} amplitude distance, wherein j is an integer from 1 to n-1; determining that the vibration is a damping vibration in the case that n-1 first amplitude distances are all greater than their respective subsequent amplitude distances. If there is at least one amplitude distance among the n-1 amplitude distances that is smaller than or equal to its subsequent amplitude distance, it is considered that the vibration is not a damping vibration.

As an example, in the case where n=4, the first four amplitude distances are sorted in time forward order, and it is judged whether the first amplitude distance is greater than the second amplitude distance, whether the second amplitude distance is greater than the third amplitude distance, and whether the third amplitude distance is greater than the fourth amplitude distance. If yes for all of them, the vibration is a damping vibration; if no for at least one of them, the vibration is not a damping vibration.

In some embodiments, the judging whether the n first amplitude distances successively decrease in time order may include: judging whether the first amplitude distance in the n first amplitude distances is greater than a preset distance; and judging whether the n first amplitude distances successively decrease in the case that the first amplitude distance is greater than the preset distance.

In order to exclude a damping vibration caused by accidental touch by a user or caused by ambient wind, it is necessary to judge whether the first amplitude distance in time forward sequence is greater than the preset distance, and if it is not greater than that, the power of the vibration is relatively small, and thus it is not caused by the user's trigger action.

It should be understood that when a user performs a trigger action on the fan, first wobbling of the fan is the largest, and then the fan swings on its own with its amplitude being slowly narrowed until balance. Thus, the judgment is to avoid false trigger caused when the user is wobbling the fan or moving with the fan.

In some embodiments, the acquiring, based on the vibration trajectory information, position information of n first peaks and n first troughs of the vibration trajectory information in time order may include: acquiring the total number of all peaks and troughs of the vibration trajectory information; and acquiring the position information of n first peaks and n first troughs of the vibration trajectory information in time order in the case that the total number of all peaks and troughs is greater than or equal to 2n.

In order to further exclude a damping vibration caused by accidental touch by a user or caused by ambient wind, it is necessary to ensure that there is enough number of fluctuations in vibration, so determination of the number of peaks and troughs is required.

In some embodiments, the step 101 may include: collecting vibration trajectory information for the vibration in a preset direction using a gravity sensor.

The preset direction is a direction set by the manufacturer in advance, and may vary depending on different devices. In an example of the electrical fan, it may be set that a trigger action (such as knock, tap and the like) is only allowed to be performed by a user on a surface (front surface) of fan head of the electrical fan facing the user side. Thus, in order to simplify acquisition of vibration trajectory information, the device can acquire only information at a position having largest variation. Clearly, variation in position information of a position in a vertical direction of front surface of the fan head is the largest and most useful. In general, the vertical direction of front surface of the fan head is a horizontal direction. The preset direction may also be other preset directions such as the vertical direction. The present disclosure is not limited thereto.

In some embodiments, the step 103 may include: performing, in the case that the vibration is a damping vibration, a trigger instruction corresponding to the vibration.

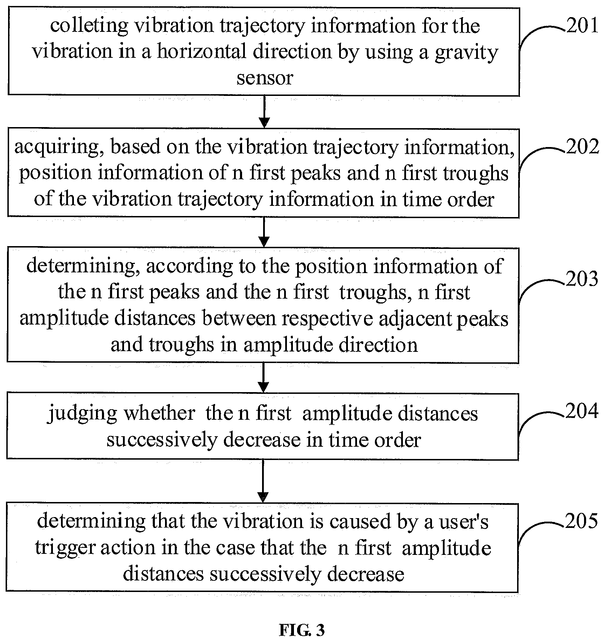

Figure 3 is a flow chart of a method for identifying an action according to some exemplary embodiments. As shown in Figure 3, the method is applicable to a device for identifying an action, which can be used for intelligent interaction with an electrical fan. The method include the following steps 201 to 205.

In step 201, vibration trajectory information of vibration in a horizontal direction is collected by a gravity sensor.

For the electrical fan, the preset direction is a horizontal direction.

In step 202, based on the vibration trajectory information, position information of n first peaks and n first troughs of the vibration trajectory information is acquired in time order.

In step 203, according to the position information of the n first peaks and the n first troughs, n first amplitude distances between respective adjacent peaks and troughs in amplitude direction are determined.

In step 204, a judgment as to whether the n first amplitude distances successively decrease in time order is made.

In step 205, in the case that the n first amplitude distances successively decrease, it is determined that the vibration is generated by a user's trigger action in a preset area.

In the present embodiment, it is able to determine that the vibration is a damping vibration by successive decrease in the amplitude distances, and thus determine that the vibration is triggered by the user, and thereby human-machine interaction is achieved and the user's experience can be improved.

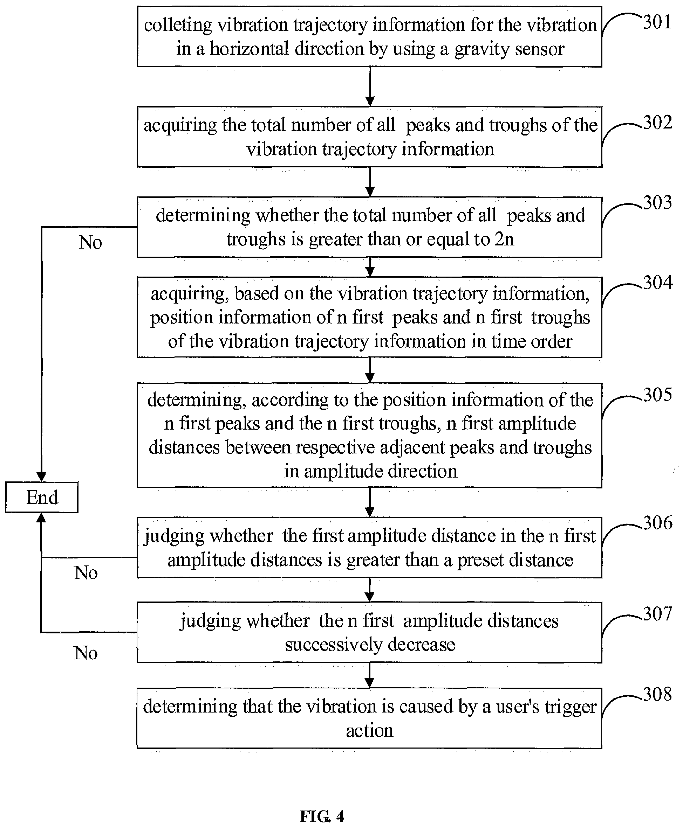

Figure 4 is a flow chart of a method for identifying an action according to some exemplary embodiments. As shown in Figure 4, the method is applicable to a device for identifying an action, which can be used for intelligent interaction with an electrical fan. The method include the following steps 301 to 308.

In step 301, vibration trajectory information of vibration in a height direction with respect to the horizontal plane is collected by a gravity sensor.

For the electrical fan, the preset direction is a longitudinal direction of the electrical fan.

In step 302, the total number of all peaks and troughs of the vibration trajectory information are acquired.

In step 303, a determination as to whether the total number of all peaks and troughs is greater than or equal to 2n is made. If yes, step 304 is performed; if not, the process is ended.

In step 304, position information of n first peaks and n first troughs of the vibrationn trajectory information is acquired in time order.

In step 305, according to the position information of the n first peaks and the n first troughs, n first n amplitude distances between respective adjacent peaks and troughs in amplitude direction are determined.

In step 306, a judgment as to whether the first one in the n first amplitude distances is greater than a preset distance. If yes, step 307 is performed; if not, the process is ended.

In step 307, a judgment as to whether the n first amplitude distances successively decrease in time order is made. If yes, step 308 is performed; if not, the process is ended.

In step 308, it is determined that the vibration is generated by a user's trigger action.

In the present embodiment, by setting conditions for the vibration, such as a minimum value of the first amplitude distance and the number of peaks and troughs of the vibration, it is able to avoid false trigger occurred when the user are wobbling the fan or are moving with the fan, and thus ensure that the vibration is triggered by the user giving to the fan a force and thereby accuracy of action identification can be improved.

The following is a device embodiment of the present disclosure, which is applicable to carry out the method embodiments of the present disclosure.

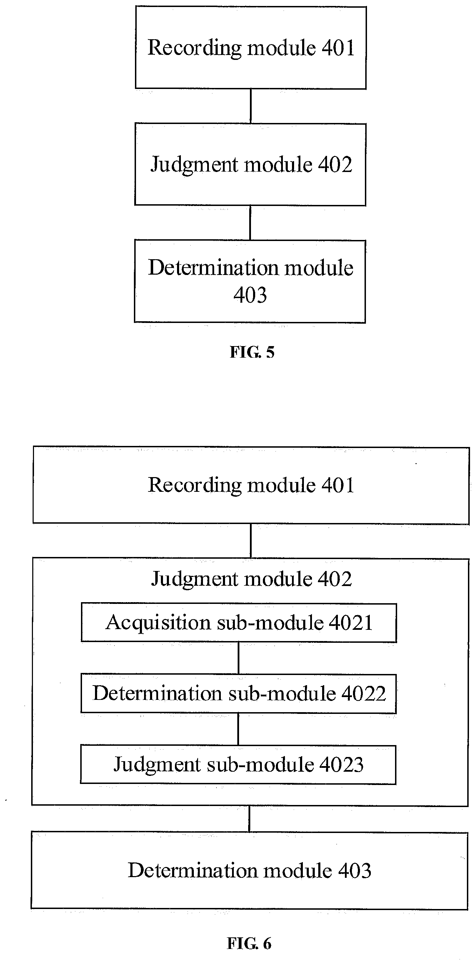

Figure 5 is a block diagram of a device for identifying an action according to some exemplary embodiments. The device is applicable to interactive control of an intelligent device, and can be implemented as part or all of an electronic device by software, hardware, or a combination of both. As shown in Figure 5, the device for identifying an action includes: a recording module 401 configured to record vibration trajectory information for vibration of an intelligent device from start to stabilization of the vibration; a judgment module 402 configured to determine whether the vibration is a damping vibration based on the vibration trajectory information; and a determination module 403 configured to determine that the vibration is caused by a user's trigger action in the case that the vibration is a damping vibration.

In the present embodiment, a condition that the intelligent device generates a damping vibration merely is to receive an impact force, rather than vibration generated by movement of the intelligent device, so that the intelligent device can recognize that the vibration is caused by a user's trigger action, without requiring human-machine interaction by using keyboard or remote control, and thus user's experience can be improved.

In some embodiments, as shown in Figure 6, the judgment module 402 may include: an acquisition sub-module 4021 configured to acquire, based on the vibration trajectory information, position information of n first peaks and n first troughs of the vibrationn trajectory information in time order, wherein n is a positive integer; a determination sub-module 4022 configured to determine, according to the position information of the n first peaks and the n first troughs, n first amplitude distances between respective adjacent peaks and troughs in amplitude direction; and a judgment sub-module 4023 configured to judge whether the n first amplitude distances successively decrease in time order; wherein it is determined that the vibration is a damping vibration in the case that the n first amplitude distances successively decrease, and it is determined that the vibration is not a damping vibration in the case that the n first amplitude distances do not successively decrease.

In an embodiment, the judgment sub-module 4023 may be configured to: judge whether the first amplitude distance in the n first amplitude distances is greater than a preset distance; and judge whether the n first amplitude distances successively decrease in the case that the first amplitude distance is greater than the preset distance.

In some embodiments, the acquisition sub-module 4021 may be configured to: acquire the total number of all peaks and troughs of the vibration trajectory information; and acquire the position information of n first peaks and n first troughs of the vibration trajectory information in time order in the case that the total number of all peaks and troughs is greater than or equal to 2n.

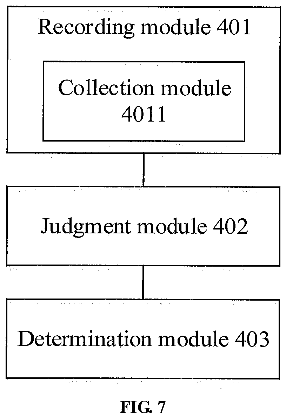

In some embodiments, as shown in Figure 7, the recording module 401 may include: a collection sub-module 4011 configured to collet vibration trajectory information for the vibration in a preset direction by using a gravity sensor.

In some embodiments, there is provided a device for identifying an action, which is used for interactive control of an intelligent device. The device includes: a processor; a memory for storing instructions executable by the processor, wherein the processor is configured to: record vibration trajectory information for vibration of an intelligent device from start to stabilization of the vibration; judge whether the vibration is a damping vibration based on the vibration trajectory information; and determine that the vibration is caused by a user's trigger action in the case that the vibration is a damping vibration.

The processor may be configured to: acquire, based on the vibration trajectory information, position information of n first peaks and n first troughs of the vibration trajectory information in time order, wherein n is a positive integer; determine, according to the position information of the n first peaks and the n first troughs, n first amplitude distances between respective adjacent peaks and troughs in amplitude direction; and judging whether the n first amplitude distances successively decrease in time order, wherein it is determined that the vibration is a damping vibration in the case that the n first amplitude distances successively decrease, and it is determined that the vibration is not a damping vibration in the case that the n first amplitude distances do not successively decrease.

The judging whether the n first amplitude distances successively decrease in time order may include: judging whether the first amplitude distance in the n first amplitude distances is greater than a preset distance; and judging whether the n first n amplitude distances successively decrease in the case that the first amplitude distance is greater than the preset distance.

The acquiring, based on the vibration trajectory information, position information of n first peaks and n first troughs of the vibration trajectory information in time order may include: acquiring the total number of all peaks and troughs of the vibration trajectory information; and acquiring the position information of n first peaks and n first troughs of the vibration trajectory information in time order in the case that the total number of all peaks and troughs is greater than or equal to 2n.

The recording vibration trajectory information for vibration of an intelligent device from start to stabilization of the vibration may include: collecting vibration trajectory information for the vibration in a preset direction by using a gravity sensor.

With respect to the devices of the above embodiments, the specific mode in which each module performs the operation has been described in detail in the embodiment relating to the method, and the description thereof will not be described in detail herein.

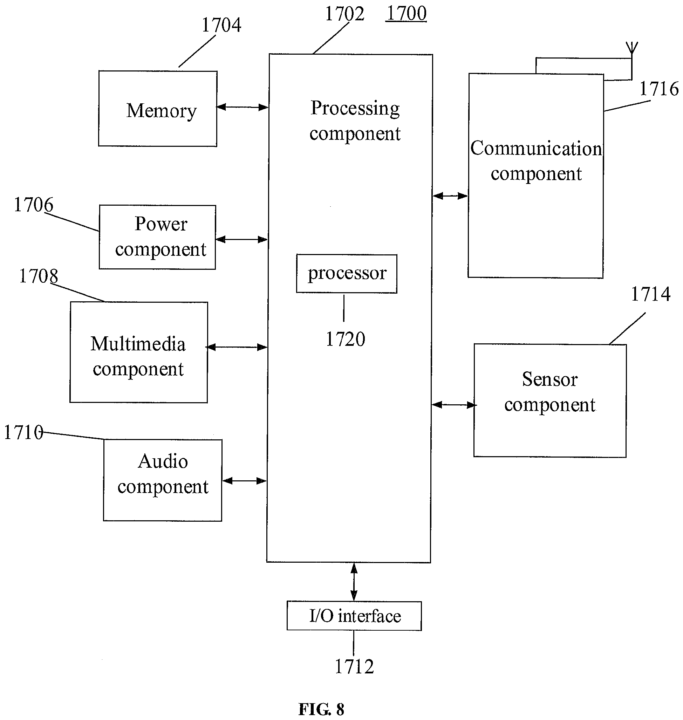

Figure 8 is a block diagram of a device for identifying an action according to some exemplary embodiments. The device is applicable to a terminal device. For example, the device 1700 may be a mobile phone, a computer, a digital broadcast terminal, a messaging device, a gaming console, a tablet, a medical device, an exercise equipment, a personal digital assistant, and the like.

The device 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the above described methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the device 1700. The power component 1706 may include a power management system, one or more power sources, and any other components associated with the generation, management, and distribution of power in the device 1700.

The multimedia component 1708 includes a screen providing an output interface between the device 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swiping action, but also sense a period of time and a pressure associated with the touch or swiping action. In some embodiments, the multimedia component 1708 includes a front camera and/or a rear camera. The front camera and the rear camera may receive an external multimedia datum while the device 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone ("MIC") configured to receive an external audio signal when the device 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, etc. The buttons may include, but are not limited to, a home button, a volume button, a starting button, and a locking button.

The sensor component 1714 includes one or more sensors to provide status assessments of various aspects of the device 1700. For instance, the sensor component 1714 may detect an open/closed status of the device 1700, relative positioning of components, e.g., the display and the keypad, of the device 1700. The sensor component 1714 may further detect a change in position of the device 1700 or a component of the device 1700, a presence or absence of user contact with the device 1700, an orientation or an acceleration/deceleration of the device 1700, and a change in temperature of the device 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the device 1700 and other devices. The device 1700 can access a wireless network based on a communication standard, such as WiFi, 2G, or 3G, or a combination thereof. In some exemplary embodiments, the communication component 1716 receives a broadcast signal or broadcast associated information from an external broadcast management system via a broadcast channel. In some exemplary embodiments, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 1720 in the device 1700, for performing the above-described methods. For example, the non-transitory computer-readable storage medium may be a ROM, a RAM, a CD-ROM, a magnetic tape, a floppy disc, an optical data storage device, and the like.

A non-temporary computer readable storage medium that enables the device 1700 to perform the method for identifying an action when the instructions in the storage medium are executed by the processor of the device 1700. The method includes: recording vibration trajectory information for vibration of an intelligent device from start to stabilization of the vibration; judging whether the vibration is a damping vibration based on the vibration trajectory information; and determining that the vibration is caused by a user's trigger action in the case that the vibration is a damping vibration.

The judging whether the vibration is a damping vibration based on the vibration trajectory information may include: acquiring, based on the vibration trajectory information, position information of n first peaks and n first troughs of the vibration trajectory information in time order, wherein n is a positive integer; determining, according to the position information of the n first peaks and the n first troughs, n first amplitude distances between respective adjacent peaks and troughs in amplitude direction; and judging whether the n first amplitude distances are successively decreased in time order, wherein it is determined that the vibration is a damping vibration in the case that the n first amplitude distances successively decrease, and it is determined that the vibration is not a damping vibration in the case that the n first amplitude distances do not successively decrease.

The judging whether the n first amplitude distances successively decrease in time order may include: judging whether the first amplitude distance in the n first amplitude distances is greater than a preset distance; and judging whether the n first amplitude distances successively decrease in the case that the first amplitude distance is greater than the preset distance.

The acquiring, based on the vibration trajectory information, position information of first n peaks and first n troughs of the vibration trajectory information in time order may include: acquiring the total number of all peaks and troughs of the vibration trajectory information; and acquiring the position information of n first peaks and n first troughs of the vibration trajectory information in time order in the case that the total number of all peaks and troughs is greater than or equal to 2n.

The recording vibration trajectory information for vibration of an intelligent device from start to stabilization of the vibration may include: collecting vibration trajectory information for the vibration in a preset direction by using a gravity sensor.

Other embodiments of the present disclosure will be readily apparent to those skilled in the art upon consideration of the specification and practice of the disclosure disclosed herein. The present application is intended to cover any variations, uses, or adaptations of the present disclosure that follow the general principles of the present disclosure and include the common general knowledge or conventional technical means in the art without departing from the present disclosure The specification and examples are to be regarded as illustrative only, and the true scope of the disclosure is indicated by the following claims.

It is to be understood that this disclosure is not limited to the precise constructions described above and shown in the accompanying drawings, and that various modifications and changes may be made without departing from the scope thereof. The scope of the present disclosure is limited only by the appended claims.

## Claims

1. A method for identifying a trigger action, which is used for interactive control of an intelligent device, comprising:
recording (101, 201, 301) vibration trajectory information for vibration of an intelligent device from a time point at which the intelligent device starts to wobble to a time point at which the intelligent device stops wobbling, wherein the vibration trajectory is a movement trajectory described by an x-axis indicating time and a y-axis indicating amplitude of vibration;
judging (102, 204, 307) whether the vibration is a damping vibration based on the vibration trajectory information; and
determining (103, 205, 308) that the vibration is caused by a user's trigger action in the case that the vibration is a damping vibration, wherein the trigger action is an action that imparts a force to the intelligent device,
**characterized in that** the judging whether the vibration is a damping vibration based on the vibration trajectory information comprises:
acquiring (202, 302), based on the vibration trajectory information, position information of n first peaks and n first troughs of the vibration trajectory information in time order, wherein n is a positive integer;
determining (203, 305), when the acquired number of peaks and throughs is greater than or equal to 2n (303), according to the position information of the n first peaks and the n first troughs, n first amplitude distances between respective adjacent peaks and troughs in amplitude direction; and
judging (306) whether the first amplitude distance in the n first amplitude distances is greater than a preset distance;
judging (204, 307), when the first amplitude distance in the n first amplitude distances is greater than the preset distance, whether the n first amplitude distances successively decrease in time order; and
wherein it is determined that the vibration is a damping vibration in the case that the n first amplitude distances successively decrease (205, 308), and it is determined that the vibration is not a damping vibration in the case that the n first amplitude distances do not successively decrease.

2. A method according to claim 1, wherein the recording vibration trajectory information for vibration of an intelligent device from start to stabilization of the vibration comprises:
collecting (201, 301) vibration trajectory information for the vibration in a preset direction by using a gravity sensor.

3. A device for identifying a trigger action, which is used for interactive control of an intelligent device, comprising:
a recording module (401) configured to record vibration trajectory information for vibration of an intelligent device from a time point at which the intelligent device starts to wobble to a time point at which the intelligent device stops wobbling, wherein the vibration trajectory is a movement trajectory described by an x-axis indicating time and a y-axis corresponding to amplitude of vibration;
a judgment module (402) configured to determine whether the vibration is a damping vibration based on the vibration trajectory information; and
a determination module (403) configured to determine that the vibration is caused by a user's trigger action in the case that the vibration is a damping vibration, wherein the trigger action is an action that imparts a force to the intelligent device,
**characterized in that** the judgment module comprises:
an acquisition sub-module (4021) configured to acquire, based on the vibration trajectory information, position information of n first peaks and n first troughs of the vibration trajectory information in time order, wherein n is a positive integer;
a determination sub-module (4022) configured to determine, when the acquired number of peaks and throughs is greater than or equal to 2n, according to the position information of the n first peaks and the n first troughs, n first amplitude distances between respective adjacent peaks and troughs in amplitude direction; and
a judgment sub-module (4023) configured to judge whether the first amplitude distance in the n first amplitude distances is greater than a preset distance, and judge, when the first amplitude distance in the n first amplitude distances is greater than the preset distance, whether the n first amplitude distances successively decrease in time order; and
wherein it is determined that the vibration is a damping vibration in the case that the n first amplitude distances successively decrease, and it is determined that the vibration is not a damping vibration in the case that the n first amplitude distances do not successively decrease.

4. The device according to claim 3, wherein the recording module (401) comprises:
a collection sub-module (4011) configured to collect vibration trajectory information for the vibration in a preset direction by using a gravity sensor.

5. The device according to any one of claim 3 to 4, comprising
a processor (1720);
a memory (1704) for storing instructions executable by the processor;
wherein the processor is configured to function as the respective modules.

## Patentansprüche

1. Verfahren zur Erkennung einer Auslöseaktion, die zur interaktiven Steuerung einer intelligenten Vorrichtung verwendet wird, mit den folgenden Schritten:
Aufzeichnen (101, 201, 301) von Schwingungsverlaufsinformationen über Schwingungen einer intelligenten Vorrichtung von einem Zeitpunkt, zu dem die intelligente Vorrichtung zu wobbeln beginnt, bis zu dem Zeitpunkt, an dem die intelligente Vorrichtung aufhört zu wobbeln, wobei der Schwingungsverlauf ein Bewegungsverlauf ist, der durch eine die Zeit angebende x-Achse und eine die Schwingungsamplitude angebende y-Achse beschrieben ist;
auf den Schwingungsverlaufsinformationen basierendes Beurteilen (102, 204, 307), ob die Schwingung eine Dämpfungsschwingung ist; und
Feststellen (103, 205, 308), dass die Schwingung durch eine Auslöseaktion eines Benutzers bewirkt wurde, wenn die Schwingung eine Dämpfungsschwingung ist, wobei die Auslöseaktion eine Aktion ist, die eine Kraft auf die intelligente Vorrichtung aufbringt,
**dadurch gekennzeichnet, dass** das auf den Schwingungsverlaufsinformationen basierende Beurteilen, ob die Schwingung eine Dämpfungsschwingung ist, aufweist:
auf den Schwingungsverlaufsinformationen basierendes Erfassen (202, 302) von Positionsinformationen über n erste Spitzen und n erste Täler der Schwingungsverlaufsinformationen in zeitlicher Reihenfolge, wobei n eine positive ganze Zahl ist;
wenn die erfasste Anzahl von Spitzen und Tälern größer als oder gleich 2n ist (303), Bestimmen (203, 305) von n ersten Amplitudenabständen zwischen jeweiligen benachbarten Spitzen und Tälern in der Amplitudenrichtung, entsprechend den Positionsinformationen über die n ersten Spitzen und die n ersten Täler; und Beurteilen (306), ob der erste Amplitudenabstand in den n ersten Amplitudenabständen größer als ein voreingestellter Abstand ist;
wenn der erste Amplitudenabstand in den n ersten Amplitudenabständen größer als ein voreingestellter Abstand ist, Beurteilen (204, 307), ob die n ersten Amplitudenabstände in zeitlicher Reihenfolge sukzessive abnehmen; und
wobei festgestellt wird, dass die Schwingung eine Dämpfungsschwingung ist, wenn die n ersten Amplitudenabstände sukzessive abnehmen (205, 308), und festgestellt wird, dass die Schwingung keine Dämpfungsschwingung ist, wenn die n ersten Amplitudenabstände nicht sukzessive abnehmen.

2. Verfahren nach Anspruch 1, bei welchem das Aufzeichnen von Schwingungsverlaufsinformationen über Schwingungen einer intelligenten Vorrichtung vom Beginn bis zur Stabilisierung der Schwingung den folgenden Schritt aufweist:
Sammeln (201, 301) von Schwingungsverlaufsinformationen über die Schwingung in einer voreingestellten Richtung unter Verwendung eines Schwerkraft-sensors.

3. Vorrichtung zur Erkennung einer Auslöseaktion, die zur interaktiven Steuerung einer intelligenten Vorrichtung verwendet wird, mit:
einem Aufzeichnungsmodul (401), das zum Aufzeichnen (101, 201, 301) von Schwingungsverlaufsinformationen über Schwingungen einer intelligenten Vorrichtung von einem Zeitpunkt, zu dem die intelligente Vorrichtung zu wobbeln beginnt, bis zu dem Zeitpunkt, an dem die intelligente Vorrichtung aufhört zu wobbeln, ausgebildet ist, wobei der Schwingungsverlauf ein Bewegungsverlauf ist, der durch eine die Zeit angebende x-Achse und eine die Schwingungsamplitude angebende y-Achse beschrieben ist;
einem Beurteilungsmodul (402), das dazu ausgebildet ist, basierend auf den Schwingungsverlaufsinformationen zu beurteilen, ob die Schwingung eine Dämpfungsschwingung ist; und
einem Feststellungsmodul (403), das dazu ausgebildet ist, festzustellen, dass die Schwingung durch eine Auslöseaktion eines Benutzers bewirkt wurde, wenn die Schwingung eine Dämpfungsschwingung ist, wobei die Auslöseaktion eine Aktion ist, die eine Kraft auf die intelligente Vorrichtung aufbringt,
**dadurch gekennzeichnet, dass** das Beurteilungsmodul aufweist:
ein Erfassungs-Teilmodul (4021), das dazu ausgebildet ist, auf der Basis der Schwingungsverlaufsinformationen Positionsinformationen über n erste Spitzen und n erste Täler der Schwingungsverlaufsinformationen in zeitlicher Reihenfolge zu erfassen, wobei n eine positive ganze Zahl ist;
ein Bestimmungs-Teilmodul (4022), das dazu ausgebildet ist, wenn die erfasste Anzahl von Spitzen und Tälern größer als oder gleich 2n ist, n erste Amplitudenabstände zwischen jeweiligen benachbarten Spitzen und Tälern in der Amplitudenrichtung, entsprechend den Positionsinformationen über die n ersten Spitzen und die n ersten Täler, zu bestimmen; und
ein Beurteilungs-Teilmodul (4023), das dazu ausgebildet ist, zu beurteilen, ob der erste Amplitudenabstand in den n ersten Amplitudenabständen größer als ein voreingestellter Abstand ist, und wenn der erste Amplitudenabstand in den n ersten Amplitudenabständen größer als ein voreingestellter Abstand ist, zu beurteilen, ob die n ersten Amplitudenabstände in zeitlicher Reihenfolge sukzessive abnehmen; und
wobei festgestellt wird, dass die Schwingung eine Dämpfungsschwingung ist, wenn die n ersten Amplitudenabstände sukzessive abnehmen, und festgestellt wird, dass die Schwingung keine Dämpfungsschwingung ist, wenn die n ersten Amplitudenabstände nicht sukzessive abnehmen.

4. Vorrichtung nach Anspruch 3, bei welcher das Aufzeichnungsmodul (401) aufweist:
ein Sammel-Teilmodul (4011), das dazu ausgebildet ist, Schwingungsverlaufsinformationen über die Schwingung in einer voreingestellten Richtung unter Verwendung eines Schwerkraftsensors zu sammeln.

5. Vorrichtung nach einem der Ansprüche 3 bis 4, mit:
einem Prozessor (1720);
einem Speicher (1704) zum Speichern von durch den Prozessor ausführbaren Befehlen;
wobei der Prozessor dazu ausgebildet ist, als die jeweiligen Module zu arbeiten.

## Revendications

1. Procédé d'identification d'une action de déclenchement qui est utilisée pour la commande interactive d'un dispositif intelligent, comprenant le fait de:
enregistrer (101, 201, 301) les informations de trajectoire de vibration pour la vibration d'un dispositif intelligent d'un moment où le dispositif intelligent commence à osciller à un moment où le dispositif intelligent cesse d'osciller, où la trajectoire de vibration est une trajectoire de mouvement décrite par un axe x indiquant le temps et un axe y indiquant l'amplitude de vibration;
juger (102, 204, 307) si la vibration est une vibration d'atténuation sur base des informations de trajectoire de vibration; et
déterminer (103, 205, 308) que la vibration est provoquée par l'action de déclenchement d'un utilisateur au cas où la vibration est une vibration d'atténuation, où l'action de déclenchement est une action qui confère une force au dispositif intelligent,
**caractérisé par le fait que** le jugement de si la vibration est une vibration d'atténuation sur base des informations de trajectoire de vibration comprend le fait de:
acquérir (202, 302), sur base des informations de trajectoire de vibration, les informations de position de n premières pointes et de n premiers creux des informations de trajectoire de vibration dans l'ordre temporel, où n est un nombre entier positif;
déterminer (203, 305), lorsque le nombre de pointes et de creux acquis est supérieur ou égal à 2n (303), selon les informations de position des n premières points et des n premiers creux, n premières distances d'amplitude entre pointes et creux adjacents respectifs dans la direction de l'amplitude; et
juger (306) si la première distance d'amplitude dans les n premières distances d'amplitude est supérieure à une distance préétablie;
juger (204, 307), lorsque la première distance d'amplitude dans les n premières distances d'amplitude est supérieure à la distance préétablie, si les n premières distances d'amplitude diminuent successivement dans l'ordre temporel; et
dans lequel il est déterminé que la vibration est une vibration d'atténuation au cas où les n premières distances d'amplitude diminuent successivement (205, 308), et il est déterminé que la vibration n'est pas une vibration d'atténuation au cas où les n premières distances d'amplitude ne diminuent pas successivement.

2. Procédé selon la revendication 1, dans lequel l'enregistrement des informations de trajectoire de vibration pour la vibration d'un dispositif intelligent du début à la stabilisation de la vibration comprend le fait de:
collecter (201, 301) les informations de trajectoire de vibration pour la vibration dans une direction préétablie à l'aide d'un capteur de gravité.

3. Dispositif d'identification d'une action de déclenchement qui est utilisée pour la commande interactive d'un dispositif intelligent, comprenant:
un module d'enregistrement (401) configuré pour enregistrer les informations de trajectoire de vibration pour la vibration d'un dispositif intelligent d'un moment où le dispositif intelligent commence à osciller à un moment où le dispositif intelligent cesse d'osciller, où la trajectoire de vibration est une trajectoire de mouvement décrite par un axe x indiquant le temps et un axe y correspondant à l'amplitude de vibration;
un module de jugement (402) configuré pour déterminer si la vibration est une vibration d'atténuation sur base des informations de trajectoire de vibration; et
un module de détermination (403) configuré pour déterminer que la vibration est provoquée par l'action de déclenchement d'un utilisateur au cas où la vibration est une vibration d'atténuation, où l'action de déclenchement est une action qui confère une force au dispositif intelligent,
**caractérisé par le fait que** le module de jugement comprend:
un sous-module d'acquisition (4021) configuré pour acquérir, sur base des informations de trajectoire de vibration, les informations de position de n premières pointes et de n premiers creux des informations de trajectoire de vibration dans l'ordre temporel, où n est un nombre entier positif;
un sous-module de détermination (4022) configuré pour déterminer, lorsque le nombre de pointes et de creux acquis est supérieur ou égal à 2n, selon les informations de position des n premières pointes et des n premiers creux, n premières distances d'amplitude entre les pointes et creux adjacents respectifs dans la direction de l'amplitude; et
un sous-module de jugement (4023) configuré pour juger si la première distance d'amplitude dans les n premières distances d'amplitude est supérieure à une distance préétablie, et juger, lorsque la première distance d'amplitude dans les n premières distances d'amplitude est supérieure à la distance préétablie, si les n premières distances d'amplitude diminuent successivement dans l'ordre temporel; et
dans lequel il est déterminé que la vibration est une vibration d'atténuation au cas où les n premières distances d'amplitude diminuent successivement, et il est déterminé que la vibration n'est pas une vibration d'atténuation au cas où les n premières distances d'amplitude ne diminuent pas successivement.

4. Dispositif selon la revendication 3, dans lequel le module d'enregistrement (401) comprend:
un sous-module de collecte (4011) configuré pour collecter les informations de trajectoire de vibration pour la vibration dans une direction préétablie à l'aide d'un capteur de gravité.

5. Dispositif selon l'une quelconque des revendications 3 à 4, comprenant
un processeur (1720);
une mémoire (1704) pour mémoriser les instructions exécutables par le processeur;
dans lequel le processeur est configuré pour fonctionner comme les modules respectifs.
